(19) Europäisches Patentamt
European Patent Office
Office européen des brevets

(11) Veröffentlichungsnummer: **0 026 742**
**B1**

(12) # EUROPÄISCHE PATENTSCHRIFT

(45) Veröffentlichungstag der Patentschrift: **13.04.83**

(51) Int. Cl.³: **C 07 F 9/65,** C 08 K 5/49, C 09 D 5/00

(21) Anmeldenummer: **80810297.4**

(22) Anmeldetag: **22.09.80**

(54) **Neue Diazaphospholane und Diazaphosphorinane, ihre Verwendung als Lichtschutzmittel und damit stabilisiertes Material.**

(30) Priorität: **27.09.79 CH 8720/79**

(43) Veröffentlichungstag der Anmeldung: **08.04.81 Patentblatt 81/14**

(45) Bekanntmachung des Hinweises auf die Patenterteilung: **13.04.83 Patentblatt 83/15**

(84) Benannte Vertragsstaaten: **CH DE FR GB LI**

(56) Entgegenhaltungen:
**DE-A-2 040 975**
**DE-A-2 349 962**
**FR-A-2 335 520**
**US-A-3 970 636**

(73) Patentinhaber: **CIBA-GEIGY AG, Patentabteilung Postfach, CH-4002 Basel (CH)**

(72) Erfinder: **Karrer, Friedrich, Dr., Rebbergstrasse 5, CH-4800 Zofingen (CH)**

**EP 0 026 742 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Neue Diazaphospholane und Diazaphosphorinane, ihre Verwendung als Lichtschutzmittel und damit stabilisiertes Material

Gegenstand der vorliegenden Erfindung sind neue Diazaphospholan- und Diazaphosphorinan-Derivate, deren Ringstickstoffe mindestens einen Polyalkylpiperidinrest tragen, sowie die Verwendung dieser Verbindungen als Lichtschutzmittel für organische Materialien, insbesondere für organische Polymere, und die mit diesen Verbindungen stabilisierten Materialien.

Es handelt sich dabei im einzelnen um die Verbindung der Formel I,

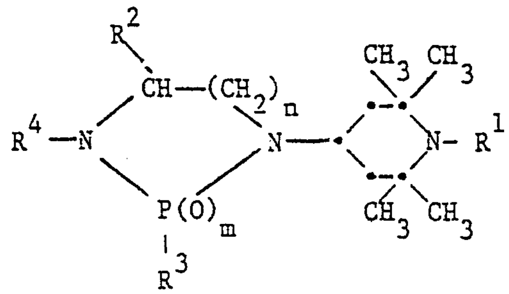

(I)

worin

m null oder 1 ist,
n 1 oder 2 ist,
$R^1$ Wasserstoff, Sauerstoff, $C_1-C_{12}$-Alkyl, $C_3-C_5$-Alkenyl, Propargyl, $C_7-C_{11}$-Phenylalkyl, $C_8-C_{15}$-Alkylphenylalkyl, $C_2-C_4$-Hydroxyalkyl, $C_4-C_{10}$-Acyloxyalkyl, Cyanomethyl, $C_1-C_4$-Alkanoyl oder $C_3-C_4$-Alkenoyl bedeutet,
$R^2$ Wasserstoff oder Methyl ist,
$R^3$ $C_1-C_{12}$-Alkyl, $C_2-C_7$-Alkenyl, $C_6-C_{12}$-Aryl, $C_7-C_{11}$-Phenylalkyl, Styryl, durch $C_1-C_4$-Alkyl substituiertes Phenyl, $C_5-C_6$-Cycloalkyl, 2-Cyclohexylvinyl, $C_1-C_{12}$-Alkoxy, $C_2-C_6$-Alkenyloxy, Phenoxy, durch $C_1-C_4$-Alkyl substituiertes Phenoxy, $C_7-C_{11}$-Phenylalkoxy, $C_5-C_6$-Cycloalkoxy oder $-NR^5R^6$ bedeutet,
$R^4$ Wasserstoff, $C_1-C_4$-Alkyl, $C_5-C_6$-Cycloalkyl, Phenyl oder eine Gruppe der Formel II bedeutet

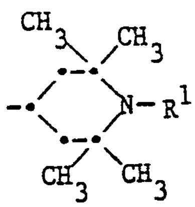

(II)

und $R^5$ und $R^6$ unabhängig voneinander Wasserstoff, $C_1-C_{12}$-Alkyl, $C_3-C_5$-Alkenyl, Cyclohexyl oder Phenyl bedeuten oder $R^5$ und $R^6$ zusammen $C_4-C_5$-Alkylen oder 3-Oxapentylen-1,5 darstellen.

Wenn n 1 ist, so stellen diese Verbindungen Derivate des 1,3,2-Diazaphospholans dar. Wenn n 2 ist, so handelt es sich um Derivate des 1,3,2-Diazaphosphorinans.

Wenn m null ist, handelt es sich um Verbindungen mit dreiwertigem Phosphor. Wenn m 1 ist, handelt es sich um Verbindungen des fünfwertigen Phosphors.

$R^1$, $R^3$, $R^5$ und $R^6$ als Alkyl können verzweigte oder unverzweigte Alkylgruppen darstellen wie z. B. Methyl, Äthyl, Isopropyl, tert.-Butyl, Hexyl, 2-Äthylhexyl, Octyl, Isononyl, Decyl oder Dodecyl.

$R^1$, $R^5$ und $R^6$ als Alkenyl kann z. B. Allyl, Methallyl, Crotyl oder 2-Methyl-2-butenyl sein. $R^3$ als Alkenyl kann darüber hinaus auch z. B. Vinyl, 1-Propenyl, 1-Isobutenyl, 1-Hexenyl oder 4,4-Dimethylpent-1-enyl sein.

$R^1$ als Hydroxyalkyl kann z. B. 2-Hydroxyäthyl, 2-Hydroxypropyl oder 2-Hydroxybutyl sein. $R^1$ als Acyloxyalkyl kann z. B. 2-Acetoxyäthyl, 2-Butyroyloxypropyl oder 2-Benzoyloxyäthyl sein. $R^1$ als Acyl kann z. B. Formyl, Acetyl, Propionyl, Acryloyl oder Butyroyl sein.

$R^1$ und $R^3$ als Phenylalkyl können z. B. Benzyl, 1-Phenyläthyl, 2-Phenyläthyl, 1-Phenylisopropyl, 3-Phenylpropyl oder 4-Phenylbutyl sein.

$R^1$ als Alkylphenylalkyl kann z. B. 4-Methylbenzyl, 3-Isopropylbenzyl, 4-t-Butylbenzyl, 2-(4'-Butylphenyl)-äthyl oder 3,5-Dimethylbenzyl sein.

$R^3$ als Alkoxy kann verzweigtes oder unverzweigtes Alkoxy sein, wie z. B. Methoxy, Äthoxy, Isopropoxy, sec.-Butoxy, Hexyloxy, Octyloxy oder Dodecyloxy. $R^3$ als Alkenyloxy kann z. B. Vinyloxy, Allyloxy oder 1-Hexenyloxy sein.

$R^3$ als Phenylalkoxy kann z. B. Benzyloxy oder 3-Phenylpropyloxy sein.

Es ist bekannt, daß Polyalkylpiperidin-Derivate Lichtschutzmittel sind, insbesondere für organische

Polymere. In der DE-OS 2 040 975 und 2 349 962 sind 4-Aminoderivate von Polyalkylpiperidinen und deren N-Alkyl- und N-Acylderivate als Lichtschutzmittel beschrieben, jedoch keine N-Phosphonylderivate. Viele dieser bekannten 4-Aminopiperidin-Derivate neigen beim Erwärmen zu Verfärbungen, andere davon sind relativ schwach wirksam. Demgegenüber neigen die erfindungsgemäßen Verbindungen der Formel I nicht zu Verfärbungen und zeigen eine sehr ausgeprägte Lichtschutzwirkung. Die Verbindungen mit m = 0 zeigen darüber hinaus auch noch eine gewisse oder beträchtliche antioxidative Wirkung.

Bevorzugt sind Verbindungen der Formel I, worin m 1 ist, n 1 oder 2 ist, $R^1$ Wasserstoff, $C_1-C_4$-Alkyl, $C_3-C_5$-Alkenyl oder Benzyl, $R^2$ Wasserstoff oder Methyl, $R^3$ $C_1-C_6$-Alkyl, $C_2-C_7$-Alkenyl, Cyclohexyl, Phenyl, $C_1-C_6$-Alkoxy, $C_3-C_4$-Alkenyloxy, Cyclohexyloxy, Phenoxy oder durch $C_1-C_4$-Alkyl substituiertes Phenoxy und $R^4$ Wasserstoff, $C_1-C_4$-Alkyl, Cyclohexyl, Phenyl oder eine Gruppe der Formel II bedeuten.

Besonders bevorzugt sind Verbindungen der Formel I, worin m 1 ist, n 1 oder 2 ist, $R^1$ Wasserstoff, Methyl, Allyl oder Benzyl, $R^2$ Wasserstoff oder Methyl, $R^3$ $C_1-C_4$-Alkyl, Cyclohexyl, Phenyl, $C_1-C_4$-Alkoxy, Cyclohexyloxy oder Phenoxy und $R^4$ Wasserstoff, $C_1-C_4$-Alkyl, Cyclohexyl, Phenyl oder eine Gruppe der Formel II bedeuten, wobei solchen Verbindungen, worin $R^4$ eine Gruppe der Formel II ist, besondere Bedeutung zukommt.

Beispiele für Verbindungen der Formel I sind

1,3-Bis(2,2,6,6-tetramethylpiperidyl-4)-2-methyl-2-oxo-1,3,2-diazaphospholan
1,3-Bis(2,2,6,6-tetramethylpiperidyl-4)-2-benzyl-2-oxo-1,3,2-diazaphospholan
1,3-Bis(2,2,6,6-tetramethylpiperidyl-4)-2-cyclohexyl-2-oxo-1,3,2-diazaphospholan
1,3-Bis(2,2,6,6-tetramethylpiperidyl-4)-2-phenyl-2-oxo-1,3,2-diazaphospholan
1,3-Bis(1-methyl-2,2,6,6-tetramethylpiperidyl-4)-2-butyl-1,3,2-diazaphosphorinan
1,3-Bis(1-benzyl-2,2,6,6-tetramethylpiperidyl-4)-2-styryl-2-oxo-4-methyl-1,3,2-diazaphospholan
1,3-Bis(1-[2-acetoxyäthyl]-2,2,6,6-tetramethylpiperidyl-4)-2-vinyl-2-oxo-4-methyl-1,3,2-diazaphosphorinan
1,3-Bis(1-acetyl-2,2,6,6-tetramethylpiperidyl-4)-2-(2-butylvinyl)-2-oxo-1,3,2-diazaphosphorinan
1,3-Bis(1-acryloyl-2,2,6,6-tetramethylpiperidyl-4)-2-(2-cyclohexylvinyl)-2-oxo-1,3,2-diazaphospholan
1,3-Bis(2,2,6,6-tetramethylpiperidyl-4)-2-phenyl-1,3,2-diazaphospholan
1,3-Bis(1,2,2,6,6-pentamethylpiperidyl-4)-2-methoxy-2-oxo-1,3,2-diazaphospholan
1,3-Bis(1,2,2,6,6-pentamethylpiperidyl-4)-2-phenoxy-2-oxo-1,3,2-diazaphospholan
1,3-Bis(2,2,6,6-tetramethylpiperidyl-4)-2-cyclohexyloxy-2-oxo-1,3,2-diazaphosphorinan
1,3-Bis(1-allyl-2,2,6,6-tetramethylpiperidyl-4)-2-methyl-2-oxo-1,3,2-diazaphospholan
1,3-Bis(1-benzyl-2,2,6,6-tetramethylpiperidyl-4)-2-methyl-2-oxo-1,3,2-diazaphospholan
1,3-Bis(1,2,2,6,6-pentamethylpiperidyl-4)-2-diäthylamino-2-oxo-1,3,2-diazaphospholan
1,3-Bis(2,2,6,6-tetramethylpiperidyl-4)-2-morpholino-2-oxo-4-methyl-1,3,2-diazaphospholan
1,3-Bis(1-benzyl-2,2,6,6-tetramethylpiperidyl-4)-2-phenyl-1,3,2-diazaphospholan
1,3-Bis(1-allyl-2,2,6,6-tetramethylpiperidyl-4)-2-äthoxy-1,3,2-diazaphospholan
1-(2,2,6,6-Tetramethylpiperidyl-4)-2-phenyl-3-cyclohexyl-1,3,2-diazaphosphorinan
1-(2,2,6,6-Tetramethylpiperidyl-4)-2-benzyl-2-oxo-1,3,2-diazaphospholan
1-(1,2,2,6,6-Pentamethylpiperidyl-4)-2,3-dibutyl-2-oxo-1,3,2-diazaphosphorinan

Die Verbindungen der Formel I können als cyclische Diamide von Phosphonsäuren, Phosphonigsäuren, Phosphorsäure-monoestern oder Phosphorigsäuremonoestern aufgefaßt werden. Dementsprechend können sie durch Umsetzung der entsprechenden Dichloride $R^3-P(O)_mCl_2$ mit den entsprechenden Diaminen der Formel III

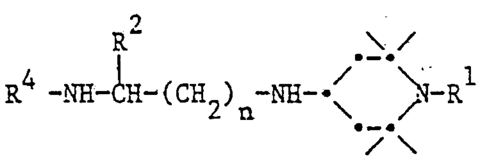

(III)

hergestellt werden. Hierbei arbeitet man vorzugsweise in einem inerten Lösungsmittel, wie z. B. Benzol, Toluol, Xylol, Tetrahydrofuran, Chloroform, Dichlormethan, 1,2-Dichloräthan, Dioxan oder Acetonitril, unter Zusatz einer Base als HCl-Akzeptor. Als Base kann man eine anorganische Base wie ein Alkalimetall-carbonat oder -hydroxid verwenden oder ein tertiäres Amin, wie z. B. Triäthylamin, Diisopropyläthylamin, Tributylamin oder Pyridin.

Setzt man die Diamine der Formel III mit einem Mol $P(O)_mX_3$ um (in Gegenwart von mindestens 2 Äquivalenten einer wasserfreien Base), so erhält man die cyclischen Phosphorhalogenide der Formel IV.

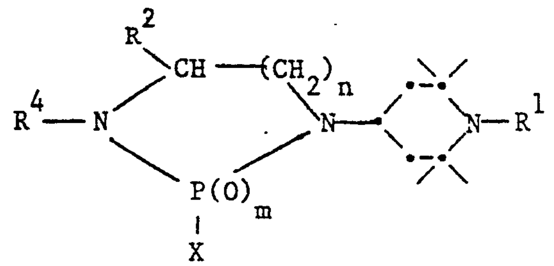

(IV)

X = Chlor oder Brom

Diese brauchen nicht isoliert zu werden, sondern können im selben Medium mit einem Mol eines Alkohols oder Phenols (in Gegenwart von 1 Äquivalent einer Base) umgesetzt werden zu den Produkten der Formel I, worin $R^3$ Alkoxy, Alkenyloxy, Aryloxy, Phenylalkoxy oder Cycloalkoxy bedeutet.

In analoger Weise führt die Umsetzung von IV mit einem Mol eines Amins der Formel $R^5-NH-R^6$ zu Verbindungen der Formel I, worin $R^3$ $-NR^5R^6$ ist.

Der Rest $R^1$ kann in einer Verfahrensvariante auch nachträglich eingeführt werden. In diesem Fall wird zuerst ein Diamin der Formel III, in dem $R^1$ Wasserstoff ist, mit einem Dichlorid $R^3-P(O)Cl_2$ umgesetzt und in die erhaltene Verbindung der Formel I, in der $R^1 = H$ ist, anschließend der Substituent $R^1$ eingeführt. Die Einführung des Substituenten $R^1$ kann nach den für N-Substituenten üblichen Verfahren geschehen, beispielsweise durch Reaktion mit Alkyl-, Alkenyl- oder Phenylalkylhalogeniden. Ein Methylrest als $R^1$ kann auch durch Reaktion mit Ameisensäure/Formaldehyd eingeführt werden. Der Cyanomethylrest kann durch Reaktion mit Formaldehyd und Blausäure oder Alkalicyaniden eingeführt werden. Hydroxyalkylreste können durch Umsetzung mit Alkylenoxiden eingeführt werden. Anschließende Veresterung der Hydroxyalkylverbindung führt zu den Acyloxyalkylverbindungen. Die Einführung eines N-Acylrestes kann durch Reaktion mit Carbonsäurehalogeniden oder -anhydriden geschehen. Verbindungen, in denen $R^1$ ein Sauerstoff-Radikal ist, sogenannte N-Oxyle, entstehen aus den Wasserstoff-Verbindungen durch Reaktion mit Peroxi-Verbindungen wie z. B. Peroxicarbonsäuren oder mittels Wasserstoffperoxid in Gegenwart von Wolfram-Katalysatoren.

Die Diamine der Formel III sind aus den DE-OS 2 611 208 und 2 349 962 bekannt und können durch katalytische Hydrogenierung der entsprechenden 4-Oxopiperidine in Gegenwart von primären Diaminen hergestellt werden, wobei der Rest $R^1$ vor oder nach der Hydrierung eingeführt werden kann.

Die Dichloride $R-P(O)_mCl_2$ sind allgemein bekannte Verbindungen, deren Herstellung beispielsweise in Houben—Weyl, Methoden der Organischen Chemie, G. Thieme Verlag, Stuttgart, 1964, Band XII/1, 302 und 387, und Band XII/2, 12 und 212, referiert ist.

Die Verbindungen der Formel I sind als Stabilisatoren für organische Materialien, die gegen Lichteinwirkung empfindlich sind, verwendbar. Sie besitzen eine relativ hohe thermische Stabilität. Neben einer ausgeprägten Lichtschutzwirkung ist auch eine antioxidative Wirkung feststellbar, insbesondere bei den Verbindungen der Formel I mit 3-wertigem Phosphor ($m = 0$). Die Verbindungen der Formel I besitzen auch eine gewisse flammhemmende Wirkung, die durch Kombination mit anderen Flammschutzmitteln, z. B. Halogenverbindungen, verstärkt werden kann.

Lichtempfindliche Materialien sind beispielsweise Fette und Öle, photographische Filme und Papiere, kosmetische Grundstoffe, insbesondere jedoch Kunststoffe und Lacke. Polymere, die Basis für solche Kunststoffe und Lacke sein können, sind die folgenden:

1. Polymere von Mono- und Diolefinen, beispielsweise Polyäthylen (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z. B. von Cyclopenten oder Norbornen.
2. Mischungen der unter 1. genannten Polymeren, z. B. Mischungen von Polypropylen mit Polyäthylen oder mit Polyisobutylen.
3. Copolymere von Mono- und Diolefinen untereinander oder mit anderen Vinylmonomeren, wie z. B. Äthylen-Propylen-Copolymere, Propylen-Buten-1-Copolymere, Propylen-Isobutylen-Copolymere, Äthylen-Buten-1-Copolymere, Propylen-Butadien-Copolymere, Isobutylen-Isopren-Copolymere, Äthylen-Alkylacrylat-Copolymere, Äthylen-Alkylmethacrylat-Copolymere, Äthylen-Vinylacetat-Copolymere oder Äthylen-Acrylsäure-Copolymere und deren Salze (Ionomere) sowie Terpolymere von Äthylen mit Propylen und einem Dien, wie Hexadien, Dicyclopentadien oder Äthylidennorbornen.
4. Polystyrol.
5. Copolymere von Styrol oder $\alpha$-Methylstyrol mit Dienen oder Acrylderivaten, wie z. B. Styrol-Butadien, Styrol-Acrylnitril, Styrol-Alkylmethacrylat, Styrol-Acrylnitril-Methylacrylat; Mischungen von hoher Schlagzähigkeit aus Styrol-Copolymeren und einem anderen Polymer wie z. B. einem Polyacrylat, einem Dien-Polymeren oder einem Äthylen-Propylen-Dien-Terpolymeren; sowie Block-Copolymere des Styrols, wie z. B. Styrol-Butadien-Styrol, Styrol-Isopren-Styrol, Styrol-Äthylen/Butylen-Styrol oder Styrol-Äthylen/Propylen-Styrol.

6. Pfropfcopolymere von Styrol, wie z. B. Styrol auf Polybutadien, Styrol und Acrylnitril auf Polybutadien, Styrol und Maleinsäureanhydrid auf Polybutadien, Styrol und Alkylacrylate bzw. Alkylmethacrylate auf Polybutadien, Styrol und Acrylnitril auf Äthylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren sowie deren Mischungen mit den unter 5. genannten Copolymeren, wie z. B. als sogenannte ABS, MBS, ASA oder AES-Polymere bekannt sind.
7. Halogenhaltige Polymere, wie z. B. Polychloropren, Chlorkautschuk, chlorierte oder chlorsulfoniertes Polyäthylen, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere wie Vinylchlorid-Vinylidenchlorid, Vinylchlorid-Vinylacetat oder Vinylidenchlorid-Vinylacetat.
8. Polymere, die sich von $\alpha,\beta$-ungesättigten Säuren und deren Derivaten ableiten, wie Polyacrylate und Polymethacrylate, Polyacrylamide und Polyacrylnitrile.
9. Copolymere der unter 8. genannten Monomeren untereinander oder mit anderen ungesättigten Monomeren, wie z. B. Acrylnitril-Butadien-Copolymere, Acrylnitril-Alkylacrylat-Copolymere, Acrylnitril-Vinylchlorid-Copolymere, oder Acrylnitril-Alkylmethacrylat-Butadien-Terpolymere.
10. Polymere, die sich von ungesättigten Alkoholen und Aminen bzw. deren Acylderivaten oder Acetalen ableiten, wie Polyvinylalkohol, Polyvinylacetat-, -stearat, -benzoat, -maleat, Polyvinylbutyral, Polyallylphthalat, Polyallylmelamin.
11. Homo- und Copolymere von cyclischen Äthern, wie Polyalkylenglykole, Polyäthylenoxyd, Polypropylenoxyd oder deren Copolymere mit Bisglycidyläthern.
12. Polyacetale, wie Polyoxymethylen, sowie solche Polyoxymethylene, die Comonomere wie z. B. Äthylenoxyd enthalten.
13. Polyphenyloxyde und -sulfide.
14. Polyurethane, die sich von Polyäthern, Polyestern und Polybutadien mit endständigen Hydroxylgruppen einerseits und aliphatischen oder aromatischen Polyisocyanaten andererseits ableiten sowie deren Vorprodukte.
15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexamethylenterephthalamid, Poly-m-phenylen-isophthalamid sowie deren Copolymere mit Polyäthern wie z. B. mit Polyäthylenglykol, Polypropylenglykol oder Polytetramethylenglykol.
16. Polyharnstoffe, Polyimide und Polyamid-imide.
17. Polyester, die sich von Dicarbonsäuren und Dialkoholen und/oder von Hydroxycarbonsäuren oder den entsprechenden Lactonen ableiten, wie Polyäthylenterephthalat, Polybutylenterephthalat, Poly-1,4-dimethylolcyclohexanterephthalat, Polyhydroxybenzoate sowie Block-Polyäther-ester, die sich von Polyäthern mit Hydroxylendgruppen ableiten.
18. Polycarbonate.
19. Polysulfone und Polyäthersulfone.
20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
21. Trocknende und nichttrocknende Alkydharze.
22. Ungestättigte Polyesterharze, die sich von Copolyestern gesättigter und ungesättigter Dicarbonsäuren mit mehrwertigen Alkoholen sowie Vinylverbindungen als Vernetzungsmittel ableiten, wie auch deren halogenhaltige, schwerbrennbare Modifikationen.
23. Vernetzbare Acrylharze, die sich von substituierten Acrylsäureestern ableiten wie z. B. von Epoxyacrylaten, Urethan-acrylaten oder Polyester-acrylaten.
24. Alkydharze, Polyesterharze und Acrylatharze, die mit Melaminharzen, Harnstoffharzen, Polyisocyanaten oder Epoxidharzen vernetzt sind.
25. Vernetzte Epoxidharze, die sich von Polyepoxiden ableiten, z. B. von Bis-glycicyläthern oder von cycloaliphatischen Diepoxiden.
26. Natürliche Polymere, wie Cellulose, Naturkautschuk, Gelatine sowie deren polymerhomolog chemisch abgewandelte Derivate, wie Celluloseacetate, -propionate und -butyrate bzw. die Celluloseäther, wie Methylcellulose.

Von diesen Polymeren sind die Gruppen 1–6, 14, 15, 17, 23 und 24 hervorzuheben, da in diesen Substraten die erfindungsgemäßen Stabilisatoren eine besonders markante Wirkung haben. Außerdem sind Polymere, die als Lackharze verwendet werden, von besonderer Bedeutung.

Die Stabilisatoren der Formel I werden den Substraten in einer Konzentration von 0,01 bis 5 Gew.-%,

vorzugsweise 0,1 bis 1 Gew.-%, berechnet auf das zu stabilisierende Material, einverleibt.

Die Einarbeitung kann beispielsweise durch Einmischen mindestens eines der erfindungsgemäßen Lichtschutzmittel und gegebenenfalls weiterer Additive nach den in der Technik üblichen Methoden, vor oder während der Formgebung, oder auch durch Aufbringen der gelösten oder dispergierten Verbindungen auf das Polymere, gegebenenfalls unter nachträglichem Verdunsten des Lösungsmittels erfolgen.

Der so stabilisierte Kunststoff kann außerdem noch andere Stabilisatoren oder sonstige in der Kunststofftechnologie übliche Zusätze enthalten, wie die beispielsweise in der DE-OS 2 349 962, Seiten 25 – 32, aufgeführt sind.

Bei der Mitverwendung bekannter Stabilisatoren können synergistische Effekte auftreten, was besonders bei Mitverwendung von anderen Lichtschutzmitteln oder von organischen Phosphiten häufig der Fall ist.

Von besonderer Bedeutung ist die Mitverwendung von Antioxydantien bei der Stabilisierung von Polyolefinen.

Die Erfindung betrifft daher auch die durch Zusatz von 0,01 bis 5 Gew.-% einer Verbindung der Formel I stabilisierten Kunststoffe, die gegebenenfalls noch andere bekannte und übliche Zusätze enthalten können. Die so stabilisierten Kunststoffe können in verschiedenster Form angewendet werden, z. B. als Folien, Fasern, Bändchen, Profile oder als Bindemittel für Lacke, Klebemittel oder Kitte.

Von besonderer Bedeutung ist die Anwendung in dünnen Schichten wie in Form von Fasern, Folien und Lacken.

Die Herstellung und Verwendung der erfindungsgemäßen Verbindungen wird in den folgenden Beispielen näher beschrieben. Teile bedeuten darin Gewichtsteile und % Gewichtsprozente.

Die Temperaturen sind in Celsius-Graden angegeben.

## Beispiel 1

Zu einer Lösung von 40,6 g (0,12 Mol) N,N'-Bis-(2,2,6,6-tetramethylpiperidyl-4)-diaminoäthan und 40 ml Triäthylamin in 140 ml Methylenchlorid tropft man unter Rühren und $N_2$-Begasung bei 0°C innerhalb von 2 Std. die Lösung von 16,5 g (0,125 Mol) Methylphosphonsäuredichlorid in 30 ml Methylenchlorid. Anschließend wird langsam auf Raumtemperatur erwärmt und über Nacht bei Raumtemperatur weiter gerührt.

Zur Aufarbeitung wird vom ausgefallenen Triäthylamin-hydrochlorid abfiltriert, das Lösungsmittel im Vakuum vollständig abdestilliert, der Rückstand in 500 ml Acetonitril gelöst, 50 g fein pulverisiertes Kaliumcarbonat zugegeben und dieses Gemisch 2 Std. bei Raumtemperatur gerührt. Hierauf wird filtriert, das Lösungsmittel aus dem Filtrat abdestilliert und der Rückstand in Cyclohexan/Toluol (ca. 10 : 1) umkristallisiert, wodurch reines 1,3-Bis-(2,2,6,6-tetramethylpiperidyl-4)-2-methyl-2-oxo-1,3,2-diazaphospholan (Verbindung Nr. 1) vom Smp. 198 – 199° erhalten wird.

$C_{21}H_{43}N_4PO$ (398,54)

| | | | | |
|---|---|---|---|---|
| Ber.: | C 63,28 | H 10,07 | N 14,06 | P 7,77% |
| Gef.: | C 63,3 | H 10,0 | N 14,3 | P 7,7% |

In analoger Weise wurden hergestellt:

1,3-Bis(1,2,2,6,6-pentamethylpiperidyl-4)-2-methyl-2-oxo-1,3,2-diazaphospholan (Verbindung Nr. 2) vom Smp. 182 – 184°,
1,3-Bis(2,2,6,6-tetramethylpiperidyl-4)-2-cyclohexyl-2-oxo-1,3,2-diazaphospholan (Verbindung Nr. 3) vom Smp. 151 – 153°,
1,3-Bis(2,2,6,6-tetramethylpiperidyl-4)-2-phenyl-2-oxo-1,3,2-diazaphospholan (Verbindung Nr. 4) vom Smp. 187 – 189°,
1,3-Bis(2,2,6,6-tetramethylpiperidyl-4)-2-butoxy-2-oxo-1,3,2-diazaphospholan (Verbindung Nr. 5) vom Smp. 56 – 58°,
1,3-Bis(2,2,6,6-tetramethylpiperidyl-4)-2-phenoxy-2-oxo-1,3,2-diazaphospholan (Verbindung Nr. 6) vom Smp. 110 – 112°,
1,3-Bis-(2,2,6,6-tetramethylpiperidyl-4)-2-(4,4-dimethylpent-1-enyl-1)-2-oxo-1,3,2-diazaphospholan (Verbindung 7) vom Smp. 98 – 100°,
1,3-Bis(2,2,6,6-tetramethylpiperidyl-4)-2-phenyl-1,3,2-diazaphospholan (Verbindung 8) vom Smp. 165°.

## Beispiel 2

Analog Beispiel 1 wurde umgesetzt N,N'-Bis(2,2,6,6-tetramethylpiperidinyl-4)-1,2-diaminopropan mit $CH_3P(O)Cl_2$ zu 1,3-Bis(2,2,6,6-tetramethylpiperidyl-4)-2-methyl-2-oxo-4-methyl-1,3,2-diazaphospholan (Verbindung Nr. 9) vom Smp. 158—162°.

## Beispiel 3

Analog Beispiel 1 wurde umgesetzt N,N'-Bis(2,2,6,6-tetramethylpiperidyl-4)-1,3-diaminopropan mit $C_3H_7P(O)Cl_2$ zu 1,3-Bis(2,2,6,6-tetramethylpiperidyl-4)-2-propyl-2-oxo-1,3,2-diazaphosphorinan (Verbindung Nr. 10) vom Smp. 163—169°.

## Beispiel 4

Analog Beispiel 1 wurde umgesetzt N,N'-Bis(1,2,2,6,6-pentamethylpiperidyl-4)-1,3-diaminopropan mit $C_6H_5P(O)Cl_2$ zu 1,3-Bis(1,2,2,6,6-pentamethylpiperidyl-4)-2-phenyl-2-oxo-1,3,2-diazaphosphorinan (Verbindung Nr. 11) vom Smp. 155—156°.

## Beispiel 5

Analog Beispiel 1 wurde umgesetzt N-Cyclohexyl-N'-(2,2,6,6-tetramethylpiperidyl-4)-1,3-diaminopropan mit $C_6H_5P(O)Cl_2$ zu 1-(2,2,6,6-tetramethylpiperidyl-4)-2-phenyl-2-oxo-3-cyclohexyl-1,3,2-diazaphosphorinan (Verbindung Nr. 12) vom Smp. 126—127°.

## Beispiel 6

Ein Gemisch aus 19,9 g (0,05 Mol) 1,3-Bis-(2,2,6,6-tetramethylpiperidyl-4)-2-methyl-2-oxo-1,3,2-diazaphospholan (Verbindung Nr. 1), 16,6 g Kaliumcarbonat, 0,3 g fein pulverisiertes Kaliumjodid, 24,2 g Allylbromid und 80 ml Äthylmethylketon wird 24 Std. bei Rückflußtemperatur gerührt. Hierauf wird filtriert, das Filtrat im Vakuum vom Lösungsmittel befreit und das zurückbleibende kristalline Rohprodukt in Acetonitril umkristallisiert, wodurch reines 1,3-Bis-(1-allyl-2,2,6,6-tetramethylpiperidyl-4)-2-methyl-2-oxo-1,3,2-diazaphospholan (Verbindung Nr. 13) vom Smp. 168—169° erhalten wird.

$C_{27}H_{51}N_4PO$ (478,7)

| | | | |
|---|---|---|---|
| Ber.: | C 67,74 | H 10,74 | N 11,70% |
| Gef.: | C 67,7 | H 10,6 | N 11,7% |

Analog wurden erhalten:

a) aus Verbindung Nr. 4 und Allylbromid 1,3-Bis-(1-allyl-2,2,6,6-tetramethylpiperidyl-4)-2-phenyl-2-oxo-1,3,2-diazaphospholan (Verbindung Nr. 14) vom Smp. 141—142°,
b) aus Verbindung Nr. 1 und Benzylbromid 1,3-Bis(1-benzyl-2,2,6,6-tetramethylpiperidyl-4)-2-methyl-2-oxo-1,3,2-diazaphospholan (Verbindung Nr. 15) vom Smp. 154—156°.

## Beispiel 7

### Stabilisierung von Polypropylen gegen Licht

100 Teile Polypropylenpulver (Moplen, Fibre grade, der Firma Montedison) werden mit 0,2 Teilen $\beta$-(3,5-Di-tert.-butyl-4-hydroxyphenyl)-propionsäure-octadecylester, 0,1 Teilen Calciumstearat und 0,25 Teilen eines Stabilisators der folgenden Tabelle 1 im Brabender-Plastographen bei 200° C während 10 Minuten homogenisiert. Die so erhaltene Masse wird möglichst rasch dem Kneter entnommen und in einer Kniehebelpresse zu einer 2—3 mm dicken Platte gepreßt. Ein Teil des erhaltenen Rohpreßlings wird ausgeschnitten und zwischen zwei Hochglanz-Hartaluminiumfolien mit einer handhydraulischen Laborpresse während 6 Minuten bei 260° zu einer 0,1 mm dicken Folie gepreßt, die unverzüglich in kaltem Wasser abgeschreckt wird. Aus dieser werden nun Abschnitte ausgestanzt und im Xenotest 1200 belichtet. Zu regelmäßigen Zeitabständen werden diese Prüflinge aus dem Belichtungsapparat entnommen und in einem IR-Spetrophotometer auf ihren Carbonylgehalt geprüft. Die Zunahme der Carbonylextinktion bei 5,85 µm während der Belichtung ist ein Maß für den photoxidativen Abbau des Polymeren (s. L. Balaban et al., J. Polymer Sci. Part C, 22, 1059—1071 [1969]) und ist erfahrungsgemäß

mit einem Abfall der mechanischen Eigenschaften des Polymeren verbunden. Als Maß der Schutzwirkung gilt die Zeit bis Erreichen einer Carbonylextinktion von ca. 0,3, bei welcher die Vergleichsfolie brüchig ist.

Das Verhältnis dieser Belichtungszeit zur Belichtungszeit einer Blindprobe ohne Lichtschutzmittel ist der Schutzfaktor SF.

$$SF = \frac{\text{Belichtungszeit Probe}}{\text{Belichtungszeit Blindprobe}}$$

Die folgende Tabelle gibt die Schutzfaktoren der untersuchten Lichtschutzmittel an.

| Verwendetes Lichtschutzmittel | Schutzfaktor SF |
|---|---|
| Keines | 1 |
| Verbindung Nr. 1 | 8,1 |
| Verbindung Nr. 2 | 9,5 |
| Verbindung Nr. 3 | 7,3 |
| Verbindung Nr. 13 | 7,5 |

**Patentansprüche**

1. Verbindungen der Formel I

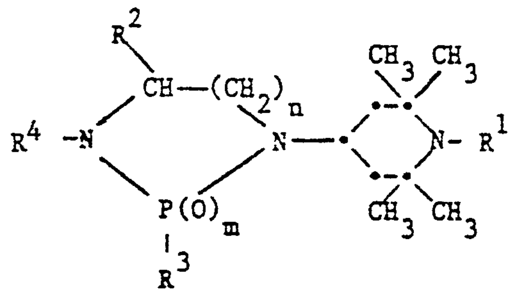

(I)

worin

m null oder 1 ist,
n 1 oder 2 ist,
$R^1$ Wasserstoff, Sauerstoff, $C_1-C_{12}$-Alkyl, $C_3-C_5$-Alkenyl, Propargyl, $C_7-C_{11}$-Phenylalkyl, $C_8-C_{15}$-Alkylphenylalkyl, $C_2-C_4$-Hydroxyalkyl, $C_4-C_{10}$-Acyloxyalkyl, Cyanomethyl, $C_1-C_4$-Alkanoyl oder $C_3-C_4$-Alkenoyl bedeutet,
$R^2$ Wasserstoff oder Methyl ist,
$R^3$ $C_1-C_{12}$-Alkyl, $C_2-C_7$-Alkenyl, $C_6-C_{12}$-Aryl, $C_7-C_{11}$-Phenylalkyl, Styryl, durch $C_1-C_4$-Alkyl substituiertes Phenyl, $C_5-C_6$-Cycloalkyl, 2-Cyclohexylvinyl, $C_1-C_{12}$-Alkoxy, $C_2-C_6$-Alkenyloxy, Phenoxy, durch $C_1-C_4$-Alkyl substituiertes Phenoxy, $C_7-C_{11}$-Phenylalkoxy, $C_5-C_6$-Cycloalkoxy oder $-NR^5R^6$ bedeutet,
$R^4$ Wasserstoff, $C_1-C_4$-Alkyl, $C_5-C_6$-Cycloalkyl, Phenyl oder eine Gruppe der Formel II bedeutet

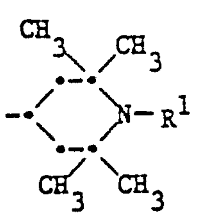

(II)

und $R^5$ und $R^6$ unabhängig voneinander Wasserstoff, $C_1-C_{12}$-Alkyl, $C_3-C_5$-Alkenyl, Cyclohexyl oder Phenyl bedeuten oder $R^5$ und $R^6$ zusammen $C_4-C_5$-Alkylen oder 3-Oxapentylen-1,5 darstellen.

2. Verbindungen gemäß Anspruch 1 der Formel I, worin m 1 ist, n 1 oder 2 ist, $R^1$ Wasserstoff,

$C_1-C_4$-Alkyl, $C_3-C_5$-Alkenyl oder Benzyl, $R^2$ Wasserstoff oder Methyl, $R^3$ $C_1-C_6$-Alkyl, $C_2-C_7$-Alkenyl, Cyclohexyl, Phenyl, $C_1-C_6$-Alkoxy, $C_3-C_4$-Alkenyloxy, Cyclohexyloxy, Phenoxy oder durch $C_1-C_4$-Alkyl substituiertes Phenoxy und $R^4$ Wasserstoff, $C_1-C_4$-Alkyl, Cyclohexyl, Phenyl oder eine Gruppe der Formel II bedeuten.

3. Verbindungen gemäß Anspruch 1 der Formel I, worin m 1 ist, n 1 oder 2 ist, $R^1$ Wasserstoff, Methyl, Allyl oder Benzyl, $R^2$ Wasserstoff oder Methyl, $R^3$ $C_1-C_4$-Alkyl, Cyclohexyl, Phenyl, $C_1-C_4$-Alkoxy, Cyclohexyloxy oder Phenoxy und $R^4$ Wasserstoff, $C_1-C_4$-Alkyl, Cyclohexyl, Phenyl oder eine Gruppe der Formel II bedeuten.

4. Verbindungen gemäß Anspruch 3, worin $R^4$ eine Gruppe der Formel II ist.

5. Verwendung der Verbindungen des Anspruchs 1 als Stabilisatoren für organische Materialien, die gegen Lichteinwirkung empfindlich sind.

6. Verwendung gemäß Anspruch 5 als Stabilisatoren für Kunststoffe und Lacke.

7. Gegen Lichteinwirkung stabilisiertes organisches Material, dadurch gekennzeichnet, daß es 0,01 bis 5 Gew.-% einer Verbindung des Anspruchs 1 enthält.

8. Stabilisiertes Material gemäß Anspruch 7, dadurch gekennzeichnet, daß es sich um einen Kunststoff oder einen Lack handelt.

**Claims**

1. A compound of the formula I

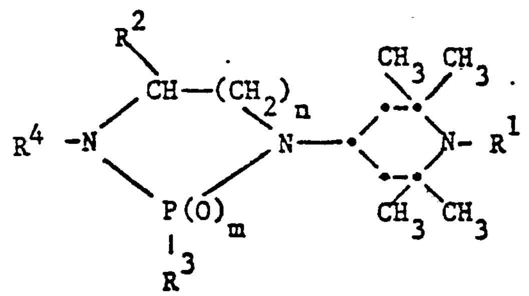

(I)

in which

m is 0 or 1,
n is 1 or 2,
$R^1$ is hydrogen, oxygen, $C_1-C_{12}$alkyl, $C_3-C_5$alkenyl, propargyl, $C_7$» $-C_{11}$phenylalkyl, $C_8-C_{15}$alkylphenylalkyl, $C_2-C_4$hydroxyalkyl, $C_4-C_{10}$acyloxyalkyl, cyanomethyl, $C_1-C_4$alkanoyl or $C_3-C_4$alkenoyl,
$R^2$ is hydrogen or methyl,
$R^3$ is $C_1-C_{12}$alkyl, $C_2-C_7$alkenyl, $C_6-C_{12}$aryl, $C_7-C_{11}$phenylalkyl, styryl, phenyl substituted by $C_1-C_4$alkyl, or $C_5-C_6$cycloalkyl, 2-cyclohexylvinyl, $C_1-C_{12}$alkoxy, $C_2-C_6$alkenyloxy, phenoxy, phenoxy substituted by $C_1-C_4$alkyl, or $C_7-C_{11}$phenylalkoxy or $C_5-C_6$cycloalkoxy or $-NR^5R^6$, and
$R^4$ is hydrogen, $C_1-C_4$alkyl, $C_5-C_6$cycloalkyl phenyl, or a group of the formula II

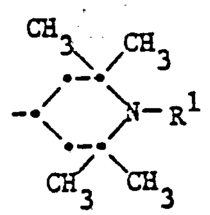

(II)

and each of $R^5$ and $R^6$ independently is hydrogen, $C_1-C_{12}$alkyl, $C_3-C_5$alkenyl, Cyclohexyl or phenyl, or $R^5$ and $R^6$ together are $C_4-C_5$alkylene or 3-oxapent-1,5-ylene.

2. A compound according to claim 1 or formula I, wherein m is 1, n is 1 or 2, $R^1$ is hydrogen, $C_1-C_4$alkyl, $C_3-C_5$alkenyl or benzyl, $R^2$ is hydrogen or methyl, $R^3$ is $C_1-C_6$alkyl, $C_2-C_7$alkenyl, cyclohexyl, phenyl, $C_1-C_6$alkoxy, $C_3-C_4$alkenyloxy, cyclohexyloxy, phenoxy, or phenoxy substituted by $C_1-C_4$alkyl, and $R^4$ is hydrogen, $C_1-C_4$alkyl, cyclohexyl, phenyl or a group of the formula II.

3. A compound according to claim 1 of formula I, wherein m is 1, n is 1 or 2, $R^1$ is hydrogen, methyl, allyl or benzyl, $R^2$ is hydrogen or methyl, $R^3$ is $C_1-C_4$alkyl, cyclohexyl, phenyl, $C_1-C_4$alkoxy, cyclohexyloxy or phenoxy, and $R^4$ is hydrogen, $C_1-C_4$alkyl, cyclohexyl, phenyl, or a group of the formula II.

4. A compound according to claim 3, wherein $R^4$ is a group of the formula II.

5. A method of stabilising organic material which is sensitive to the action of light, which comprises

the use of a compound as claimed in claim 1 as stabiliser.

6. A method according to claim 5, wherein the organic material to be stabilised is a plastics material or a lacquer.

7. Organic material stabilised against the action of light, said material containing 0.01 to 5% by weight of a compound according to claim 1.

8. Stabilised material according to claim 7 which is a plastics material or a lacqueur.

**Revendications**

1. Composés répondant à la formule I

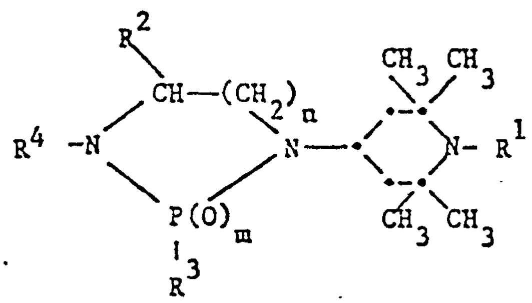

(I)

dans laquelle

m est égal à 0 ou à 1,

n est égal à 1 ou à 2,

$R^1$ représente l'hydrogène, l'oxygène, un alkyle en $C_1-C_{12}$, un alcényle en $C_3-C_5$, un propyne-2 yle (»propargyle«), un phénylalkyle en $C_7-C_{11}$, un alkylphénylalkyle en $C_8-C_{15}$, un hydroxyalkyle en $C_2-C_4$, un acyloxyalkyle en $C_4-C_{10}$, un cyanométhyle, un alcanoyle en $C_1-C_4$ ou un alcénoyle en $C_3$ ou $C_4$,

$R^2$ représente l'hydrogène ou un méthyle,

$R^3$ représente un alkyle en $C_1-C_{12}$, un alcényle en $C_2-C_7$, un aryle en $C_6-C_{12}$, un phénylalkyle en $C_7-C_{11}$, un styryle, un phényle porteur d'un alkyle en $C_1-C_4$, un cycloalkyle en $C_5$ ou $C_6$, un cyclohexyl-2 vinyle, un alcoxy en $C_1-C_{12}$, un alcényloxy en $C_2-C_6$, un phénoxy, un phénoxy porteur d'un alkyle en $C_1-C_4$, un phénylalcoxy en $C_7-C_{11}$, un cycloalcoxy en $C_5$ ou $C_6$ ou un groupe $-NR^5R^6$,

$R^4$ représente l'hydrogène, un alkyle en $C_1-C_4$, un cycloalkyle en $C_5$ ou $C_6$, un phényle ou un groupe de formule II

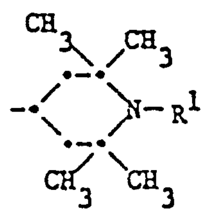

(II)

et $R^5$ et $R^6$ représentent chacun, indépendamment l'un de l'autre, un alkyle en $C_1-C_{12}$, un alcényle en $C_3-C_5$, un cyclohexyle ou un phényle, ou encore $R^5$ et $R^6$ forment ensemble un alkylène en $C_4$ ou $C_5$ ou un oxa-3 pentylène-1,5.

2. Composés de formule I selon la revendication 1 dans lesquels m est égal à 1, n est égal à 1 ou à 2, $R^1$ représente l'hydrogène, un alkyle en $C_1-C_4$, un alcényle en $C_3-C_5$ ou un benzyle, $R^2$ représente l'hydrogène ou un méthyle, $R^3$ représente un alkyle en $C_1-C_6$, un alcényle en $C_2-C_7$, un cyclohexyle, un phényle, un alcoxy en $C_1-C_6$, un alcényloxy en $C_3$ ou $C_4$, un cyclohexyloxy, un phénoxy ou un phénoxy porteur d'un alkyle en $C_1-C_4$ et $R^4$ représente l'hydrogène, un alkyle en $C_1-C_4$, un cyclohexyle, un phényle ou un radical de formule II.

3. Composés de formule I selon la revendication 1 dans lesquels m est égal m est égal à 1, n est égal à 1 ou à 2, $R^1$ représente l'hydrogène, un méthyle, un allyle ou un benzyle, $R^2$ représente l'hydrogène ou un méthyle, $R^3$ représente un alkyle en $C_1-C_4$, un cyclohexyle, un phényle, un alcoxy en $C_1-C_4$, un cyclohexyloxy ou un phénoxy et $R^4$ représente l'hydrogène, un alkyle en $C_1-C_4$, un cyclohexyle, un phényle ou un radical de formule II.

4. Composés selon la revendication 3 dans lesquels $R^4$ représente un radical de formule II.

5. Application des composés selon la revendication 1 comme stabilisants pour matières organiques sensibles à l'action de la lumière.

6. Application selon la revendication 5 comme stabilisants pour matières plastiques et peintures ou vernis.

7. Matière organique stabilisée contre l'action de la lumière, matière caractérisée en ce qu'elle contient de 0,01 à 5% en poids d'un composé selon la revendication 1.

8. Matière stabilisée selon la revendication 7, caractérisée en ce qu'il s'agit d'une matière plastique, d'une peinture ou d'un vernis.